# EUROPÄISCHE PATENTANMELDUNG

(11) **EP 4 086 144 A1**
(43) Veröffentlichungstag der Anmeldung: **09.11.2022**
(21) Anmeldenummer: 21172648.4
(22) Anmeldetag: 07.05.2021
(51) Int. Cl.: B62D 33/04, B32B 15/00, B32B 23/00, B62D 29/04

(54) **NUTZFAHRZEUGPANEEL MIT FASERVERSTÄRKTER KUNSTSTOFFSCHICHT UND NUTZFAHRZEUG MIT ENTSPRECHENDEM NUTZFAHRZEUGPANEEL**

(71) Anmelder: Schmitz Cargobull AG, 48341 Altenberge (DE)
(72) Erfinder: SCHLUMM, Dr. Michael, 48683 Ahaus (DE); STAPERFELD, Sven, 49082 Osnabrück (DE)
(74) Vertreter: Cohausz & Florack

(57) **Zusammenfassung**

Beschrieben und dargestellt ist ein Nutzfahrzeugpaneel (11,12,13) zur Bildung eines Kofferaufbaus (2), insbesondere eins Lastkraftwagens, eines Anhängers oder eines Sattelaufliegers, mit einer strukturgebenden Innendecklage (16), einer strukturgebenden Außendecklage (17) und einer zwischen der Innendecklage (16) und der Außendecklage (17) vorgesehenen Kernlage (18), wobei die Innendecklage (16) wenigstens eine faserverstärkte Kunststoffschicht aufweist. Um funktionale und zugleich kostengünstig herzustellende Nutzfahrzeugpaneele und Kofferaufbauten bereitstellt zu können, ist vorgesehen, dass der Kunststoff der wenigstens einen faserverstärken Kunststoffschicht wenigstens im Wesentlichen durch Polyvinylchlorid (PVC) gebildet wird.

## Beschreibung

Die Erfindung betrifft ein Nutzfahrzeugpaneel zur Bildung eines Kofferaufbaus, insbesondere eines Lastkraftwagens, eines Anhängers oder eines Sattelaufliegers, mit einer strukturgebenden Innendecklage, einer strukturgebenden Außendecklage und einer zwischen der Innendecklage und der Außendecklage vorgesehenen Kernlage, wobei die Innendecklage wenigstens eine faserverstärkte Kunststoffschicht aufweist. Ferner betrifft die Erfindung einen Kofferaufbau eines Nutzfahrzeugs, insbesondere Lastkraftwagen, Anhänger oder Sattelauflieger, mit einem Laderaum und mit wenigstens einem mit der Innendecklage an den Laderaum grenzenden Nutzfahrzeugpaneel.

Nutzfahrzeuge sind in unterschiedlichen Ausgestaltungen, etwa in Form von Lastkraftwagen, Anhängern oder Sattelaufliegern, bekannt. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge ein Chassis, ein mit dem Chassis verbundenes Fahrwerk und einen von dem Chassis getragenen Aufbau auf, welcher einen Laderaum bereitstellt für die Aufnahme der zu transportierenden Ladung. So sind beispielsweise Planenaufbauten bekannt, die wenigstens eine Plane zum Verschließen wenigstens einer Seite und/oder eines Dachs des Planenaufbaus aufweisen. Wenn eine Plane entlang einer Seitenwand verschoben werden kann, spricht man auch von sogenannten Curtainsidern.

Im Gegensatz dazu sind bei sogenannten Kofferaufbauten die Seitenwände und das Dach durch feste Wände verschlossen. Zudem ist rückwärtig ein Türrahmen in Form eines Rückwandrahmens vorgesehen, an dem zwei Türen in Form von Rückwandtüren gehalten und in dem in der geschlossenen Stellung der Türen die Türen aufgenommen sind. Gegenüber von dem Rückwandrahmen ist eine Stirnwand vorgesehen. Dabei können entsprechende Stirnwände und Rückwände in gleicher Weise bei Planenaufbauten und bei Kofferaufbauten vorgesehen sein.

Bei Kofferaufbauten können die Seitenwände, das Dach, die Stirnwand, der Boden und/oder die Türen in Form von mehrschichtigen Nutzfahrzeugpaneelen aufgebaut sein, die strukturgebende Innendecklagen, strukturgebende Außendecklagen und dazwischen eine Kernlage aus geschäumtem Kunststoff umfassen. Die entsprechenden Außendecklagen und Innendecklagen können bedarfsweise selbst jeweils mehrlagig ausgebildet sein und dienen der Aussteifung der Nutzfahrzeugpaneele, weshalb die Außendecklagen und Innendecklagen meist wenigstens eine Schicht aus einem Metall und/oder einem faserverstärkten Kunststoff aufweisen. Die einzelnen Nutzfahrzeugpaneele eines Kofferaufbaus werden typischerweise jeweils über Eck miteinander verbunden, um einen quaderförmigen Kofferaufbau zu bilden, der darin einen Laderaum zur Aufnahme der zu transportierenden Güter bereithält.

Da die Kernlage der Nutzfahrzeugpaneele aus einem geschäumten Kunststoff eine hohe thermische Isolation bereitstellen kann, sind entsprechende Kofferaufbauten insbesondere auch für den Transport von temperaturempfindlichen Gütern, also beispielsweise für den sogenannten Kühltransport, geeignet. Dieselben Kofferaufbauten können auch für den Transport von feuchtigkeitsempfindlichen Gütern, also den sogenannten Trockentransport, verwendet werden.

Nutzfahrzeugpaneele mit faserverstärkten Kunststoffen bieten typischerweise Gewichtsvorteile. Die Fertigung solcher Nutzfahrzeugpaneele ist jedoch recht aufwendig und teuer, weshalb die Innendecklagen und die Außendecklagen trotz des höheren Gewichts typischerweise aus einem Stahlblech gefertigt werden. Dies gilt umso mehr, da an die Nutzfahrzeugpaneele immer höhere Anforderungen gestellt werden, die durch den Einsatz faserverstärkter Kunststoffe vielfach unter wirtschaftlichen Gesichtspunkten nicht oder nur bedingt erfüllt werden können.

Der vorliegenden Erfindung liegt mithin die Aufgabe zugrunde, ein Nutzfahrzeugpaneel und einen Kofferaufbau jeweils der eingangs genannten und zuvor näher erläuterten Art derart auszugestalten und weiterzubilden, dass funktionale und zugleich kostengünstig herzustellende Nutzfahrzeugpaneele und Kofferaufbauten bereitgestellt werden können.

Diese Aufgabe ist bei einem Nutzfahrzeugpaneel nach dem Oberbegriff des Anspruchs 1 dadurch gelöst, dass der Kunststoff der wenigstens einen faserverstärken Kunststoffschicht wenigstens im Wesentlichen durch Polyvinylchlorid (PVC) gebildet wird.

Die genannte Aufgabe ist ferner bei einem Kofferaufbau nach dem Oberbegriff von Anspruch 13 dadurch gelöst, dass das Nutzfahrzeugpaneel ein Nutzfahrzeugpaneel nach einem der Ansprüche 1 bis 12 ist.

Durch die Verwendung von Polyvinylchlorid (PVC) als Kunststoff für die wenigstens eine faserverstärkte Kunststoffschicht der Innendecklage lassen sich einfach und kostengünstig Nutzfahrzeugpaneele bilden. Dabei erlaubt es die Verwendung von Polyvinylchlorid (PVC), insbesondere auf zusätzliche Klebstoffschichten und/oder Haftvermittler für das Verbinden der Innendecklage mit der Kernlage zu verzichten. Dies führt nicht nur zu einer Materialeinsparung, sondern macht auch wenigstens einen Fertigungsschritt bei der Herstellung der Nutzfahrzeugpaneele entbehrlich. Trotzdem werden aber Nutzfahrzeugpaneele mit günstigen mechanischen Eigenschaften erhalten. Es besteht keine Gefahr der Delamination und die Nutzfahrzeugpaneele sind hinreichend steif, ohne dass die faserverstärkte Kunststoffschicht zu Brüchen neigt. Nicht zuletzt können die inneren Decklagen einfach umgeformt werden, um beispielsweise zusätzliche Ausrüstungen wie Ladungssicherungsschienen aufnehmen zu können.

Bei einer ersten besonders bevorzugten Ausgestaltung des Nutzfahrzeugpaneels wird das Polyvinylchlorid der wenigstens einen faserverstärkten Kunststoffschicht durch ein Hart-PVC (PVC-U) gebildet. Dies führt zu besonders zweckmäßigen mechanischen Eigenschaften des Nutzfahrzeugpaneels und zu einem sicheren Schutz der Kernlage vor äußeren Einwirkungen. Des Weiteren wird durch die Verwendung von Hart-PVC eine besonders zuverlässige und langlebige Verbindung zwischen der Innendecklage und der Kernlage bereitgestellt.

Die Festigkeit und Langlebigkeit des Nutzfahrzeugpaneels kann zudem verbessert werden, indem die Fasern der wenigstens einen faserverstärkten Kunststoffschicht Glasfasern und/oder Kohlenstofffasern sind. Diese sind leicht und können zudem hohe Zugkräfte aufnehmen.

Alternativ oder zusätzlich können die mechanischen Eigenschaften dadurch günstig beeinflusst werden, wenn verhältnismäßig lange Fasern für die wenigstens eine Schicht aus faserverstärktem Kunststoff verwendet werden. So kann es sich insbesondere anbieten, wenn die Fasern eine Länge von wenigstens 10 cm, vorzugsweises wenigstens 40 cm, insbesondere 1 m Glasfasern aufweisen. Je länger die Fasern dabei sind, desto bessere Ergebnisse werden grundsätzlich erreicht. Dabei ist es nicht unbedingt schädlich, wenn einzelne Fasern eine kürzere Länge aufweisen. Bevorzugt sollten aber wenigstens 90 Gew.-%, vorzugsweise wenigstens 95 Gew.-%, insbesondere wenigstens 99 Gew.-% der Fasern der wenigstens einen faserverstärkten Kunststoffschicht die vorgenannte Mindestlänge aufweisen. Auch hier führt es grundsätzlich zu besseren Ergebnissen, wenn ein größerer Anteil an Fasern der wenigstens einen faserverstärkten Kunststoffschicht die entsprechende Mindestlänge aufweist.

Als besonders zweckmäßig hat es sich dabei herausgestellt, wenn die Fasern der wenigstens einen faserverstärkten Kunststoffschicht Endlosfasern sind. Dies kann bedeuten, dass die faserverstärkte Kunststoffschicht eine einzige durchgehende Faser aufweist, die den Faseranteil der faserverstärkten Kunststoffschicht bildet. Zwingend ist dies aber nicht. Von Endlosfasern bzw. von wenigstens einer endlosfaserverstärkten Kunststoffschicht kann man in diesem Zusammenhang auch dann sprechen, wenn die Länge der Fasern der wenigstens einen Schicht aus faserverstärktem Kunststoff der Länge oder der Breite des Nutzfahrzeugpaneels entspricht. Fasern, die sich in der Längsrichtung erstrecken, weisen dann zudem vorzugsweise eine Länge auf, die der Längserstreckung des Nutzfahrzeugpaneels entspricht, während Fasern, die sich in Richtung der Breite erstrecken, vorzugsweise eine Länge aufweisen, die der Breitenerstreckung des Nutzfahrzeugpaneels entspricht. Dann müssen die Zugkräfte nicht innerhalb des Nutzfahrzeugpaneels von einer Faser auf eine angrenzende Faser übertragen werden.

Unabhängig davon können die Fasern der wenigstens einen faserverstärkten Kunststoffschicht wenigstens im Wesentlichen in Form eines Gewebes oder eines Geleges vorliegen. So können Zugkräfte in verschiedenen Raumrichtungen und in definierter Weise aufgenommen werden. Daraus resultiert dann bedarfsweise ein steifes und zugleich leichtes Nutzfahrzeugpaneel.

Aus Gründen der Stabilität und zudem aus Gründen der thermischen Isolation des Nutzfahrzeugpaneels bietet es sich an, wenn die Kernlage wenigstens im Wesentlichen aus einem geschäumten Kunststoff gebildet wird. Dabei führt die Verwendung von einem geschäumten Polyurethan (PUR) als Werkstoff für die Kernlage zu einer besonders bevorzugten, weil flächigen und zuverlässigen Verbindung mit der Innendecklage.

Dies ist noch umso mehr der Fall, wenn die Kernlage mit der Innendecklage direkt verklebt ist. Dies kann bedarfsweise einfach und zuverlässig erfolgen, indem die Kernlage an die Innendecklage angeschäumt wird. Dies vereinfacht auch die Fertigung und verringert die für die Fertigung erforderlichen Verfahrensschritte.

Um das Nutzfahrzeugpaneel mit Ausrüstungseinrichtungen wie beispielsweise Ladungssicherungsschienen, Doppelstockschienen und dergleichen auszustatten, und zwar insbesondere flächenbündig mit der Innendecklage, kann die wenigstens eine Innendecklage wenigstens bereichsweise thermisch umgeformt sein. Auf diese Weise wird die Fertigung der Nutzfahrzeugpaneele vereinfacht. Außerdem kann das Umformen auf einen recht späten Verfahrensschritt verschoben werden, was die Flexibilität bei der Fertigung unterschiedlich umzuformender Nutzfahrzeugpaneele erhöht und unnötige Lagerhaltung vermeidet.

Die Außendecklage kann wenigstens eine Schicht aus einem faserverstärkten Kunststoff und/oder eine Blechlage umfassen. Im Falle einer Schicht aus Blech bietet sich aufgrund einer hohen Widerstandsfähigkeit gegenüber äußeren Einflüssen insbesondere eine solche aus Stahl oder Aluminium an.

Alternativ oder zusätzlich kann die wenigstens eine faserverstärkte Schicht der Außendecklage Polxpropylen (PP), Polyamid (PA) und/oder Polyethylenterephthalat (PET) als Kunststoff aufweisen. Auch in diesem Falle wird noch eine gute Widerstandsfähigkeit gegenüber äußeren Einflüssen erhalten. Alternativ oder zusätzlich kann aus denselben Gründen wenigstens eine faserverstärkte Schicht der Außendecklage Glasfasern und/oder Kohlenstofffasern aufweisen.

Um Nutzfahrzeugpaneele mit definierten und zugleich bevorzugten mechanischen Eigenschaften hinsichtlich Festigkeit und Steifigkeit zu erhalten, können die Fasern der wenigstens einen faserverstärkten Schicht der Außendecklage wenigstens im Wesentlichen in Form eines Gewebes oder eines Geleges vorliegen. Auf diese Weise können einfach und zuverlässig isotrope mechanische Eigenschaften bereitgestellt werden.

Die Innendecklage ist aus den zuvor genannten Gründen grundsätzlich bevorzugt ausschließlich aus einer Schicht aus einem faserverstärkten Kunststoff gebildet. Weitere Schichten sind dann entbehrlich, was auch die Herstellung des Nutzfahrzeugpaneels vereinfacht und kostengünstiger werden lässt. Gleichwohl ist dies nicht zwingend und es kann auch noch wenigstens eine weitere Schicht vorgesehen sein. Dabei kann diese wenigstens eine Schicht bestimmte, z.B. mechanische, Eigenschaften verbessern. Bei dieser wenigstens einen Schicht kann es sich sowohl und eine Blechlage aus Stahl oder Aluminium handeln als auch um wenigstens eine weitere Schicht aus einem faserverstärkten Kunststoff. Da das verwendete Polyvinylchlorid (PVC) wie beschrieben sowohl angrenzend zu der Kernschicht als auch angrenzend zum Laderaum zu besonderen Vorteilen führt, kann die wenigstens eine weitere Schicht beispielsweise zwischen zwei Schichten eines faserverstärkten Kunststoffs umfassend Polyvinylchlorid (PVC) vorgesehen sein. Für den Fall, dass die Vorteile des Polyvinylchlorids (PVC) zur Anbindung der Innendecklage an die Kernlage oder die für den Transport unverpackter Lebensmittel von geringerer Bedeutung ist, kann die wenigstens eine weitere Schicht der Innendecklage auch angrenzend an die Kernlage oder angrenzend an den Laderaum vorgesehen sein. Weitere Schichten ohne Polyvinylchlorid (PVC) sowohl angrenzend an den Laderaum als auch angrenzend an die Kernlage werden aus den zuvor genannten Gründen und Vorteilen des Polyvinylchlorid (PVC) aber grundsätzlich weniger bevorzugt sein.

Bei einer ersten besonders bevorzugten Ausgestaltung des Kofferaufbaus ist das wenigstens eine Nutzfahrzeugpaneel ein Stirnwandpaneel, ein Seitenwandpaneel oder ein Dachpaneel. Besonders bevorzugt ist es dabei weiter, wenn das Stirnwandpaneel, die Seitenwandpaneele und das Dachpaneel des Kofferaufbaus durch ein Nutzfahrzeugpaneel der zuvor beschriebenen Art gebildet werden.

Da sich die Innendecklage aus Polyvinylchlorid (PVC) unbedenklich in Bezug auf einen Kontakt mit nicht verpackten Lebensmitteln ist, kommen die erfindungsgemäßen Vorteile in besonderem Maße zum Tragen, wenn das wenigstens eine Nutzfahrzeugpaneel ein dem Dach zugeordnetes Fleischhangsystem zum hängenden Transport von unverpacktem Fleisch aufweist.

Nachfolgend wird die Erfindung anhand einer lediglich ein Ausführungsbeispiel darstellenden Zeichnung näher erläutert. In der Zeichnung zeigt
- Fig. 1: ein erfindungsgemäßes Nutzfahrzeug mit einem erfindungsgemäßen Aufbau in einer perspektivischen Ansicht,
- Fig. 2: ein Detail eines Nutzfahrzeugpaneels des Nutzfahrzeugs aus Fig. 1 in einer Schnittansicht und
- Fig. 3: ein Detail des Aufbaus einer Innendecklage des Nutzfahrzeugpaneels aus Fig. 2 in einer Seitenansicht.

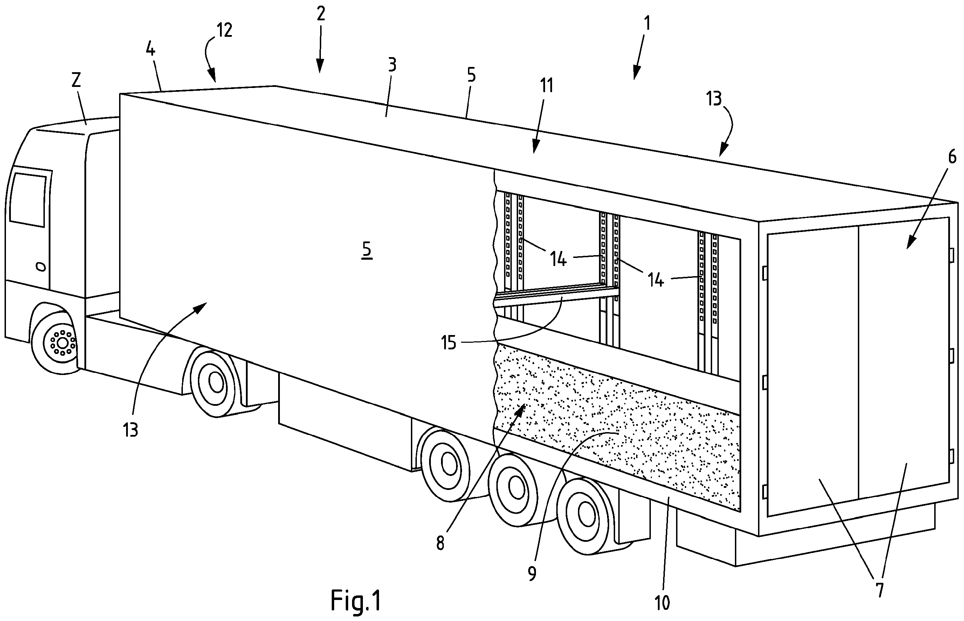

In der Fig. 1 ist ein Nutzfahrzeug 1 mit einem Kofferaufbau 2 in einer perspektivischen Ansicht dargestellt, das von einer Zugmaschine Z gezogen wird. Der Aufbau 2 umfasst ein festes Dach 3, eine feste Stirnwand 4, zwei feste Seitenwände 5 und eine feste Rückwand 6, die im Wesentlichen durch zwei Flügeltüren 7 gebildet wird. Zudem umfasst der Aufbau einen Laderaum 8, der nach unten durch einen Ladeboden 9 einer Bodenstruktur 10 begrenzt wird, wobei der Ladeboden 9 dem Aufstellen von Ladung dient.

Das Dach 3 wird im Wesentlichen durch ein Dachpaneel 11 und die Stirnwand 4 durch ein Stirnwandpaneel 12 gebildet, während die Seitenwände 5 durch Seitenwandpaneele 13 gebildet werden. In den Seitenwänden 13 sind Funktionsschienen 14 in Form von Doppelstockschienen flächenbündig eingelassen, die einen Doppelstockbalken 15 tragen können, auf dem Ladegut vom Ladeboden 9 beabstandet aufgestellt werden kann. Nicht im Einzelnen dargestellt ist, dass an der Innenseite des Dachs 3 des Kofferaufbaus 2 ein Fleischhangsystem vorgesehen ist, an dem beispielsweise Fleisch, insbesondere Schweine- und Rinderhälften aufgehängt und sodann hängend transportiert werden können, ohne dass das Fleisch verpackt werden muss. Das Fleischhangsystem weist dazu Schienen auf, die in der Längsrichtung des Kofferaufbaus 2 unterhalb des Dachs 3 verlaufen. Das Fleisch kann dann ab den Schienen aufgehängt und zum Be- und Entladen entlang der Schienen noch vorne und nach hinten verschoben werden.

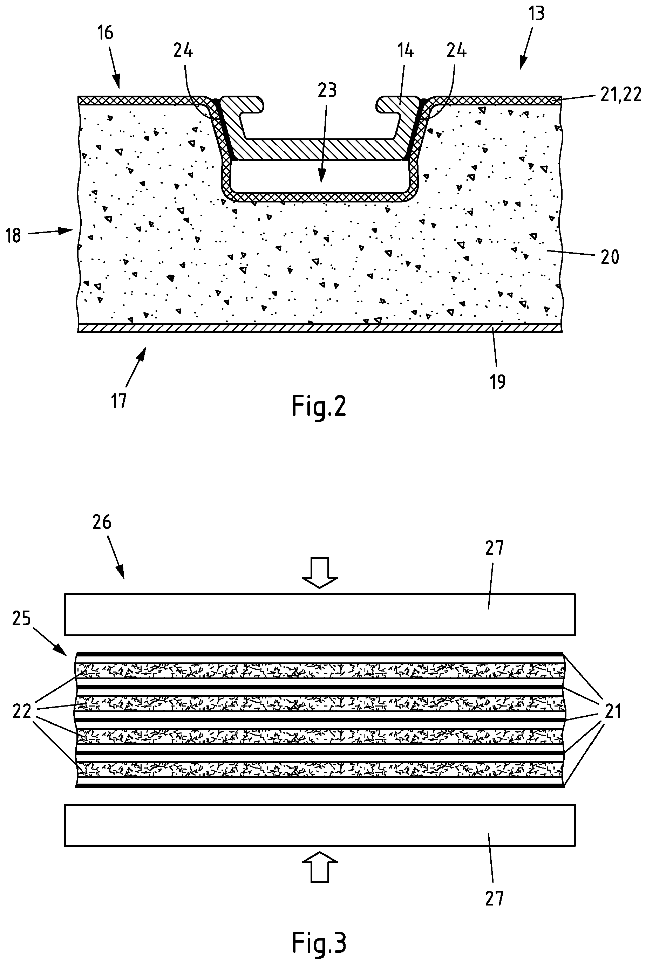

In der Fig. 2 ist ein Detail eines Nutzfahrzeugpaneels in Form des Seitenwandpaneels 13 in einer Schnittansicht dargestellt. Das Seitenwandpaneel 13 umfasst dabei eine strukturgebende Innendecklage 16, eine strukturgebende Außendecklage 17 und eine Kernlage 18. Die Innendecklage 16 und die Außendecklage 17 sorgen in wesentlichem Maße für die Formstabilität, die Festigkeit und die Steifigkeit des Seitenwandpaneels 13. Die Außendecklage 17 wird durch eine Blechlage 19 aus Stahl gebildet, während die Kernlage 18 durch einen geschäumten Kunststoff 20 in Form von Polyurethan (PUR) gebildet wird. Die Innendecklage 16 wird durch einen Werkstoffverbund in Form eines faserverstärkten Kunststoffs 21 gebildet. Der Faseranteil wird durch Gelege aus Fasern 22 in Form von Glasfasern gebildet, der in einen Kunststoff 22 in Form eines Polyvinylchlorids (PVC), konkret eines Hart-PVC (PVC-U) eingebettet ist. Zur Bildung des Seitenwandpaneels 13 wird der Zwischenraum zwischen der Innendecklage 16 und der Außendecklage 17 durch den Kunststoff 20 der Kernlage ausgeschäumt. Dabei gelangt der Kunststoff 20 beim Ausschäumen und damit vor dem eigentlichen Aushärten des Kunststoffs 20 mit der Innendecklage 16 in Kontakt und somit in eine flächige Anlage an der Innendecklage 16. Beim Aushärten des geschäumten Kunststoffs 20 verklebt dieser direkt, also ohne einen zusätzlichen Klebstoff oder einen zusätzlichen Haftvermittler, mit der Innendecklage 16. Die Nutzfahrzeugpaneele in Form des Dachpaneels 11 und das Nutzfahrzeugpaneel in Form des Stirnwandpaneels 12 sind dabei grundsätzlich geleichartig aufgebaut.

Die dargestellte und insoweit bevorzugte Innendecklage 16 ist vor dem Ausschäumen der Kernlage 18 thermisch umgeformt worden. Durch das thermische Unformen ist in der Innendecklage 16 eine Aufnahme 23 für Funktionsschienen 14 in Form von Doppelstockschienen eingeprägt worden, in der anschließend die Funktionsschiene 14 flächenbündig eingesetzt worden ist. Zur Verbindung der aus einem Metall gebildeten Funktionsschiene 14 und der Innendecklage 16 ist ein zusätzlicher Klebstoff 24 in die durch das thermische Umformen gebildete Aufnahme 23 eingebracht worden.

In der Fig. 3 ist ein Aufbau des die Innendecklage 16 bildenden Verbunds 25 dargestellt. Zur Bildung der Innendecklage 16 werden abwechselnd Folien aus Hart-PVC (PVC-U) 21 und Gelege aus Fasern 22 in Form von Glasfasern übereinandergelegt. Abschließend werden diese Lagen mit einer Kurztaktpresse oder einer Doppelbandpresse 26 mit Hilfe von beheizten Pressplatten oder Pressbändern 27 zusammengepresst. Dabei erweichen oder schmelzen die Folien des Kunststoffs 21 und tränken dementsprechend die Gelege aus den Fasern 22. Dabei kann direkt während des Pressens eine thermische Umformung der Innendecklage 16 erfolgen oder die gebildete Innendecklage 16 wird anschließend in einer anderen beheizten Presse thermisch umgeformt.

### Bezugszeichenliste

- 1: Nutzfahrzeug
- 2: Kofferaufbau
- 3: Dach
- 4: Stirnwand
- 5: Seitenwand
- 6: Rückwand
- 7: Flügeltür
- 8: Laderaum
- 9: Ladeboden
- 10: Bodenstruktur
- 11: Dachpaneel
- 12: Stirnwandpaneel
- 13: Seitenwandpaneel
- 14: Funktionsschiene
- 15: Doppelstockbalken
- 16: Innendecklage
- 17: Außendecklage
- 18: Kernlage
- 19: Blechlage
- 20: Kunststoff
- 21: Kunststoff
- 22: Fasern
- 23: Aufnahme
- 24: Klebstoff
- 25: Verbund
- 26: Doppelbandpresse
- 27: Pressband

- Z: Zugmaschine

## Patentansprüche

1. Nutzfahrzeugpaneel (11,12,13) zur Bildung eines Kofferaufbaus (2), insbesondere eins Lastkraftwagens, eines Anhängers oder eines Sattelaufliegers, mit einer strukturgebenden Innendecklage (16), einer strukturgebenden Außendecklage (17) und einer zwischen der Innendecklage (16) und der Außendecklage (17) vorgesehenen Kernlage (18), wobei die Innendecklage (16) wenigstens eine faserverstärkte Kunststoffschicht aufweist, **dadurch gekennzeichnet, dass** der Kunststoff (20) der wenigstens einen faserverstärken Kunststoffschicht wenigstens im Wesentlichen durch Polyvinylchlorid (PVC) gebildet wird.

2. Nutzfahrzeugpaneel nach Anspruch 1,
**dadurch gekennzeichnet, dass** das Polyvinylchlorid der wenigstens einen faserverstärkten Kunststoffschicht ein Hart-PVC (PVC-U) ist.

3. Nutzfahrzeugpaneel nach Anspruch 1 oder 2,
**dadurch gekennzeichnet, dass** die Fasern (21) der wenigstens einen faserverstärkten Kunststoffschicht Glasfasern und/oder Kohlenstofffasern sind.

4. Nutzfahrzeugpaneel nach einem der Ansprüche 1 bis 3,
**dadurch gekennzeichnet, dass** wenigstens 90 Gew.-%, vorzugsweise wenigstens 95 Gew.-%, insbesondere wenigstens 99 Gew.-% der Fasern (21) der wenigstens einen faserverstärkten Kunststoffschicht eine Länge von wenigstens 10 cm, vorzugsweise wenigstens 40 cm, insbesondere 1 m Glasfasern aufweisen.

5. Nutzfahrzeugpaneel nach Anspruch 4,
**dadurch gekennzeichnet, dass** die Fasern (21) der wenigstens einen faserverstärkten Kunststoffschicht Endlosfasern sind und/oder eine Länge von wenigstens der Höhe oder der Breite des Nutzfahrzeugpaneels (11,12,13) aufweisen.

6. Nutzfahrzeugpaneel nach einem der Ansprüche 1 bis 5,
**dadurch gekennzeichnet, dass** die Fasern (21) der wenigstens einen faserverstärken Kunststoffschicht wenigstens im Wesentlichen in Form eines Gewebes oder eines Geleges vorliegen.

7. Nutzfahrzeugpaneel nach einem der Ansprüche 1 bis 6,
**dadurch gekennzeichnet, dass** die Kernlage (18) wenigstens im Wesentlichen aus einem geschäumten Kunststoff (20), insbesondere Polyurethan (PUR) gebildet wird.

8. Nutzfahrzeugpaneel nach einem der Ansprüche 1 bis 7,
**dadurch gekennzeichnet, dass** die Kernlage (18) mit der Innendecklage (16) direkt verklebt ist und/oder dass die Kernlage (18) an die die Innendecklage (16) angeschäumt ist.

9. Nutzfahrzeugpaneel nach einem der Ansprüche 1 bis 8,
**dadurch gekennzeichnet, dass** die wenigstens eine Innendecklage (16) wenigstens bereichsweise thermisch umgeformt ist.

10. Nutzfahrzeugpaneel nach einem der Ansprüche 1 bis 9,
**dadurch gekennzeichnet, dass** die Außendecklage (17) wenigstens eine Schicht aus einem faserverstärkten Kunststoff und/oder eine Blechlage (19), insbesondere aus Stahl oder Aluminium, aufweist.

11. Nutzfahrzeugpaneel nach Anspruch 10,
**dadurch gekennzeichnet, dass** die wenigstens eine faserverstärkte Schicht der Außendecklage Polypropylen (PP), Polyamid (PA) und/oder Polyethylenterephthalat (PET) als Kunststoff aufweist und/oder dass die wenigstens eine faserverstärkte Schicht der Außendecklage Glasfasern und/oder Kohlenstofffasern aufweist.

12. Nutzfahrzeugpaneel nach Anspruch 10 oder 11,
**dadurch gekennzeichnet, dass** die Fasern der wenigstens einen faserverstärkten Schicht der Außendecklage wenigstens im Wesentlichen in Form eines Gewebes oder eines Geleges vorliegen.

13. Kofferaufbau (2) eines Nutzfahrzeugs, insbesondere Lastkraftwagen, Anhänger oder Sattelauflieger, mit einem Laderaum (8) und mit wenigstens einem mit der Innendecklage (16) an den Laderaum (8) grenzenden Nutzfahrzeugpaneel (11,12,13),
**dadurch gekennzeichnet, dass** das Nutzfahrzeugpaneel (11,12,13) ein Nutzfahrzeugpaneel (11,12,13) nach einem der Ansprüche 1 bis 12 ist.

14. Kofferaufbau nach Anspruch 13,
**dadurch gekennzeichnet, dass** das wenigstens eine Nutzfahrzeugpaneel (11,12,13) ein Stirnwandpaneel (12), ein Seitenwandpaneel (13) oder ein Dachpaneel (11) ist.

15. Kofferaufbau nach Anspruch 13 oder 14,
**dadurch gekennzeichnet, dass** das wenigstens eine Nutzfahrzeugpaneel (11) ein dem Dach zugeordnetes Fleischhangsystem zum hängenden Transport von unverpacktem Fleisch aufweist.
